(19) Europäisches Patentamt
European Patent Office
Office européen des brevets

(11) EP 3 587 099 A1

(12) EUROPEAN PATENT APPLICATION

(43) Date of publication:
**01.01.2020 Bulletin 2020/01**

(51) Int Cl.:
***B32B 5/02*** *(2006.01)* ***B32B 27/12*** *(2006.01)*

(21) Application number: **18197263.9**

(22) Date of filing: **27.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2018 US 201862691671 P**

(71) Applicant: **SABIC Global Technologies B.V.**
**4612 PX Bergen op Zoom (NL)**

(72) Inventors:
- **LAWRENCE, Stanley Leroy**
**Houston, Texas 77042 (US)**
- **SOHN, Sungkyun**
**Houston, Texas 77042 (US)**

(74) Representative: **Modiano, Micaela Nadia et al**
**Modiano & Partners**
**Thierschstrasse 11**
**80538 München (DE)**

Remarks:
Amended claims in accordance with Rule 137(2) EPC.

# (54) SKIN-CORE COMPOSITE AND METHOD OF MAKING

(57) In a skin-core composite, the core includes specific amounts of a core matrix thermoplastic resin and core reinforcing fibers having a length of 4 to 50 millimeters. The core optionally further includes toughening fibers and/or a binder thermoplastic resin. The skin includes specific amounts of a skin matrix thermoplastic resin and a skin reinforcing fiber. Also described is a method of forming a skin-core composite, the method including thermoforming and overmolding steps.

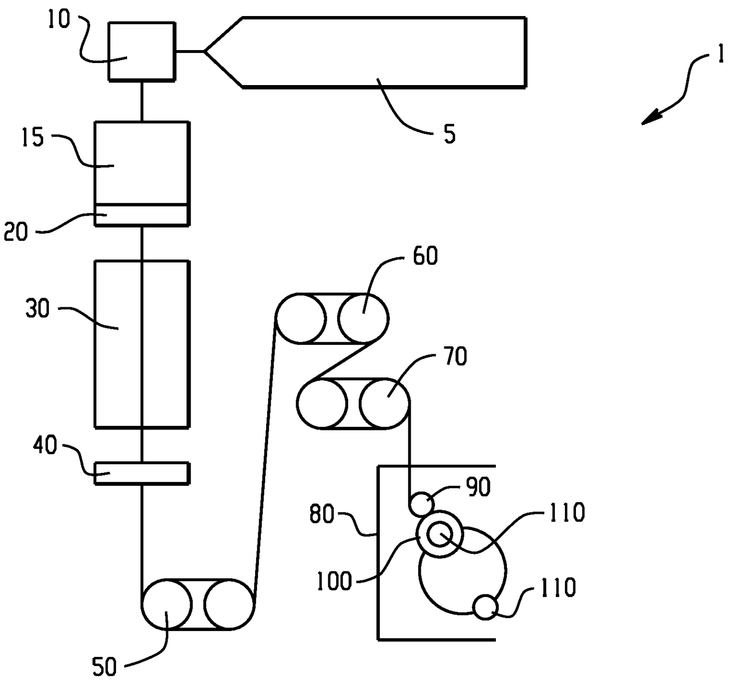


Fig. 1

EP 3 587 099 A1

## Description

BACKGROUND OF THE INVENTION

Overmolding of composite structures has been used to fabricate articles including, for example, components for automobiles, trucks, commercial airplanes, aerospace, rail, household appliances, and electronic devices. While the overmolded composite structures exhibit high strength at low weight, their surface roughness makes them unsuitable for some applications. There is therefore a need for overmolded composite structures exhibiting improved surface smoothness.

BRIEF SUMMARY OF EMBODIMENTS OF THE INVENTION

One embodiment is a skin-core composite, comprising: a core comprising, based on the total weight of the core, 20 to 90 weight percent of a core matrix thermoplastic resin having a glass transition temperature of 75 to 250 °C, 10 to 50 weight percent of core reinforcing fibers having a length of 4 to 50 millimeters, 0 to 30 weight percent of toughening fibers comprising a toughening thermoplastic resin having a glass transition temperature of 115 to 350 °C, and 0 to 20 weight percent of a binder thermoplastic resin having a glass transition temperature of 60 to 150 °C; and a skin comprising, based on the total weight of the skin, 50 to 100 weight percent of a skin matrix thermoplastic resin having a glass transition temperature of - 20 to 230 °C, and 0 to 50 weight percent of a skin reinforcing fiber.

Another embodiment is a method of forming a skin-core composite, the method comprising: thermoforming and overmolding a core to form a skin-core composite; wherein the core comprises, based on the total weight of the core, 20 to 90 weight percent of a core matrix thermoplastic resin having a glass transition temperature of 75 to 250 °C, 10 to 50 weight percent of core reinforcing fibers, 0 to 30 weight percent of toughening fibers comprising a toughening thermoplastic resin having a glass transition temperature of 115 to 350 °C, and 0 to 20 weight percent of a binder thermoplastic resin having a glass transition temperature of 60 to 150 °C; wherein the thermoforming comprises exposing the core to a temperature of 120 to 300 °C and a pressure of 2,000 to 25,000 kilopascals for a time of 50 to 500 seconds; and wherein the overmolding comprises molding a skin composition onto at least a portion of a surface of the core to form a skin that at least partially encapsulates the core; and wherein the skin composition comprises, based on the total weight of the skin composition, 50 to 100 weight percent of a skin matrix thermoplastic resin having a glass transition temperature of -20 to 230 °C, and 0 to 50 weight percent of skin reinforcing fibers.

These and other embodiments are described in detail below.

BRIEF DESCRIPTION OF THE DRAWINGS

Referring now to the drawings wherein like elements are numbered alike in the Figures:

Figure 1 is a schematic illustration of a melt spinning apparatus.
Figure 2 is a schematic illustration of a papermaking apparatus.

DETAILED DESCRIPTION OF THE INVENTION

The present inventors have determined improved surface smoothness is exhibited by overmolded composite structures in which the core includes a core matrix thermoplastic resin having a glass transition temperature of 75 to 250 °C and core reinforcing fibers having a length of 4 to 50 millimeters, and the skin includes a skin matrix thermoplastic resin having a glass transition temperature of -20 to 230 °C.

Thus, one embodiment is a skin-core composite, comprising: a core comprising, based on the total weight of the core, 20 to 90 weight percent of a core matrix thermoplastic resin having a glass transition temperature of 75 to 250 °C, 10 to 50 weight percent of core reinforcing fibers having a length of 4 to 50 millimeters, 0 to 30 weight percent of toughening fibers comprising a toughening thermoplastic resin having a glass transition temperature of 115 to 350 °C, and 0 to 20 weight percent of a binder thermoplastic resin having a glass transition temperature of 60 to 150 °C; and a skin comprising, based on the total weight of the skin, 50 to 100 weight percent of a skin matrix thermoplastic resin having a glass transition temperature of - 20 to 230 °C, and 0 to 50 weight percent of a skin reinforcing fiber.

The skin-core composite comprises a core and a skin. The core and the skin are compositionally distinct.

The core comprises a core matrix thermoplastic resin and core reinforcing fibers. Core matrix thermoplastic resins include, for example, polycarbonates, polycarbonate-polysiloxanes, poly(ethylene terephthlalate)s, polyimides, and combinations thereof. In some embodiments, the core matrix thermoplastic resin comprises a polyimide. The core comprises the core matrix thermoplastic resin in an amount of 20 to 90 weight percent, based on the total weight of the core. Within this range, the amount of core matrix thermoplastic resin can be 30 to 80 weight percent or 40 to 70 weight

percent.

Core reinforcing fibers include, for example, metal fibers, metallized inorganic fibers, metallized synthetic fibers, glass fibers, graphite fibers, carbon fibers, ceramic fibers, mineral fibers, basalt fibers, polymer fibers comprising a composition having a melting temperature or glass transition temperature at least 50 ° C greater than the glass transition temperature of the core matrix thermoplastic resin, and combinations thereof. In some embodiments, the reinforcing fibers comprise glass fibers, carbon fibers, or a combination thereof. When the core reinforcing fibers include polymer fibers, the polymer fibers can comprise a composition having a melting temperature or glass transition temperature at least 100 ° C greater than the glass transition temperature of the core matrix thermoplastic resin, or at least 150 ° C greater than the glass transition temperature of the core matrix thermoplastic resin. As used herein, the term "reinforcing fiber" refers to a fiber having an aspect ratio of at least 3:1. The core reinforcing fibers have a length of 4 to 50 millimeters. Within this range, the core reinforcing fiber length can be 10 to 40 millimeters, or 15 to 35 millimeters. In some embodiments, the core reinforcing fibers can have a diameter of 5 to 125 micrometers. Within this range, the diameter can be 10 to 100 micrometers, or 10 to 50 micrometers, or 10 to 25 micrometers.

The core comprises the core reinforcing fibers in an amount of 10 to 50 weight percent, based on the total weight of the core. Within this range, the amount of core reinforcing fibers can be 15 to 45 weight percent, or 15 to 40 weight percent.

In addition to the core matrix thermoplastic resin and the core reinforcing fibers, the core can, optionally, further comprise toughening fibers. The toughening fibers comprise a toughening thermoplastic resin having a glass transition temperature of 115 to 350 °C. Within this range, the glass transition temperature of the toughening thermoplastic resin can be 200 to 350 °C, or 250 to 350 °C. In some embodiments, the glass transition temperature of the toughening thermoplastic resin is at least 50 °C greater than the glass transition temperature of the core matrix thermoplastic resin. In some embodiments, the toughening thermoplastic resin is selected from the group consisting of aromatic polyamides (including poly(p-phenylene terephthalamide), aromatic polyesters (including liquid crystal copolymers produced by polycondensation of 4-hydroxybenzoic acid and 6-hydroxynaphthalene-2-carboxylic acid), and combinations thereof.

In some embodiments, the toughening fibers have a diameter of 5 to 125 micrometers, and a length of 5 to 75 millimeters. Within the range of 5 to 125 micrometers, the diameter can be 10 to 100 micrometers, or 10 to 50 micrometers, or 10 to 25 micrometers. Within the range of 5 to 75 millimeters, the fiber length can be 6 to 50 millimeters, or 7 to 40 millimeters, or 10 to 30 millimeters.

When present, the toughening fibers can be used in an amount of 1 to 30 weight percent, based on the total weight of the core. Within this range, the toughening fiber amount can be 10 to 30 weight percent, or 15 to 30 weight percent.

In addition to the core matrix thermoplastic resin and the core reinforcing fibers, the core can, optionally, further comprise a binder thermoplastic resin having a glass transition temperature of 60 to 150 °C. In some embodiments, the binder thermoplastic resin is selected from the group consisting of poly(vinyl alcohol)s, polycarbonates, block polyestercarbonate-polysiloxanes, and combinations thereof.

In some embodiments, the binder thermoplastic resin comprises a block polyestercarbonate-polysiloxane comprising a polyester block comprising resorcinol ester units having the structure

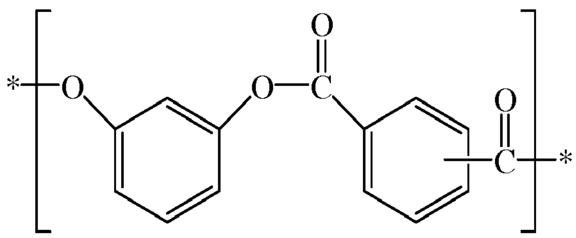

,

a polycarbonate block comprising carbonate units having the structure

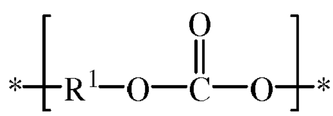

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and

further comprises, based on the weight of the block polyestercarbonate-polysiloxane, 0.2 to 4 weight percent dimethylsiloxane units. In some embodiments, the block polyestercarbonate-polysiloxane comprises, based on total moles of carbonate and ester units, 70 to 90 mole percent of resorcinol ester, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units.

When present, the binder thermoplastic resin can be used in an amount of 1 to 20 weight percent, based on the total weight of the core. Within this range, the binder thermoplastic resin amount can be 5 to 15 weight percent. In embodiments in which the core comprises 1 to 20 weight percent of the binder thermoplastic resin and 0 weight percent of the toughening fiber, the core matrix thermoplastic resin amount is 20 to 89 weight percent. In embodiments in which the core comprises 1 to 20 weight percent of the binder thermoplastic resin and 1 to 30 weight percent of the toughening fiber, the core matrix thermoplastic resin amount is 20 to 88 weight percent.

The skin of the skin-core composite comprises a skin matrix thermoplastic resin having a glass transition temperature of -20 to 230 °C. Suitable skin matrix thermoplastic resins include polypropylenes, polyesters, polyamides, polycarbonates, polyetherimides, poly(phenylene sulfide)s, polyarylketones, polycarbonate-polysiloxanes, and combinations thereof. In some embodiments, the skin matrix thermoplastic resin comprises a polycarbonate-polysiloxane. The skin comprises the skin matrix thermoplastic resin in an amount of 50 to 100 weight percent, based on the total weight of the core. Within this range, the skin matrix thermoplastic resin amount can be 50 to 90 weight percent, or 50 to 80 weight percent, or 50 to 70 weight percent.

In addition to the skin matrix thermoplastic resin, the skin can, optionally, further comprise skin reinforcing fibers. In some embodiments, the skin reinforcing fibers are selected from the group consisting of metal fibers, metallized inorganic fibers, metallized synthetic fibers, glass fibers, graphite fibers, carbon fibers, ceramic fibers, mineral fibers, basalt fibers, polymer fibers having a melting temperature or glass transition temperature at least 50 °C greater than the glass transition temperature of the skin matrix thermoplastic resin, and combinations thereof. In some embodiments, the skin reinforcing fibers comprise glass fibers, carbon fibers, or a combination thereof. In some embodiments, the skin reinforcing fibers have a diameter of 5 to 125 micrometers, and a length of 5 to 75 millimeters. Within the range of 5 to 125 micrometers, the diameter can be 10 to 100 micrometers, or 10 to 50 micrometers, or 10 to 25 micrometers. Within the range of 5 to 75 millimeters, the fiber length can be 6 to 50 millimeters, or 7 to 40 millimeters, or 10 to 30 millimeters. When present, the skin reinforcing fibers can be used in an amount of 1 to 50 weight percent, based on the total weight of the skin. Within this range, the skin reinforcing fiber amount can be 10 to 50 weight percent, or 20 to 50 weight percent, or 30 to 50 weight percent.

In a very specific embodiment of the skin-core composite, the core comprises 30 to 70 weight percent of the core matrix thermoplastic resin, 10 to 50 weight percent of the core reinforcing fibers, 5 to 25 weight percent of the toughening fibers, and 5 to 15 weight percent of the binder thermoplastic resin; the skin comprises, based on the total weight of the skin, 50 to 75 weight percent of the skin matrix thermoplastic resin, and 25 to 50 weight percent of the skin reinforcing fibers; the core matrix thermoplastic resin comprises a polyimide; the core reinforcing fibers are selected from the group consisting of glass fiber, carbon fiber, and combinations thereof; the toughening thermoplastic resin comprises an aromatic polyamide; the binder thermoplastic resin comprises a block polyestercarbonate-polysiloxane comprising a polyester block comprising resorcinol ester units having the structure

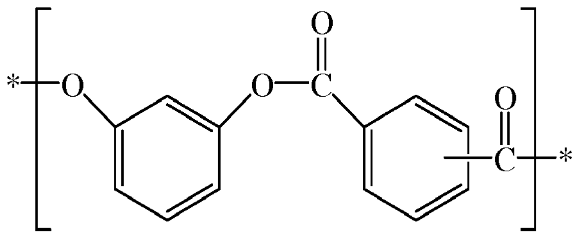

,

a polycarbonate block comprising carbonate units having the structure

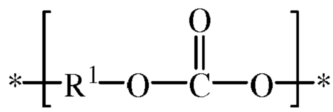

wherein at least 60 percent of the total number of $R^1$ groups are aromatic divalent groups, and a polysiloxane block comprising dimethylsiloxane units; wherein the block polyestercarbonate-polysiloxane comprises, based on total moles

of carbonate and ester units, 70 to 90 mole percent of resorcinol ester, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units; the skin matrix thermoplastic resin comprises a polycarbonate-polysiloxane; and the skin reinforcing fibers are selected from the group consisting of glass fibers, carbon fibers, and combinations thereof.

Another embodiment is a method of forming a skin-core composite, the method comprising: thermoforming and overmolding a core to form a skin-core composite; wherein the core comprises, based on the total weight of the core, 20 to 90 weight percent of a core matrix thermoplastic resin having a glass transition temperature of 75 to 250 °C, 10 to 50 weight percent of core reinforcing fibers, 0 to 30 weight percent of toughening fibers comprising a toughening thermoplastic resin having a glass transition temperature of 115 to 350 °C, and 0 to 20 weight percent of a binder thermoplastic resin having a glass transition temperature of 60 to 150 °C; wherein the thermoforming comprises exposing the core to a temperature of 120 to 300 °C and a pressure of 2,000 to 25,000 kilopascals for a time of 50 to 500 seconds; and wherein the overmolding comprises molding a skin composition onto at least a portion of a surface of the core to form a skin that at least partially encapsulates the core; and wherein the skin composition comprises, based on the total weight of the skin composition, 50 to 100 weight percent of a skin matrix thermoplastic resin having a glass transition temperature of -20 to 230 °C, and 0 to 50 weight percent of skin reinforcing fibers.

The thermoforming and overmolding steps can be sequential, in which case thermoforming precedes overmolding. Alternatively, the thermoforming and overmolding steps can be simultaneous. In some embodiments, the thermoforming, the overmolding, or a combination thereof is effective to cause lofting of the core.

Thermoforming comprises exposing the core to a temperature of 120 to 300 °C and a pressure of 2,000 to 25,000 kilopascals for a time of 50 to 500 seconds. Within the range of 2,000 to 25,000 kilopascals, the thermoforming pressure can be 2,400 to 23,100 kilopascals. Within the range 50 to 500 seconds, the thermoforming time can be 180 to 480 seconds.

Overmolding comprises molding a skin composition onto at least a portion of a surface of the core to form a skin that at least partially encapsulates the core. The overmolding step can utilize injection molding. In some embodiments, the skin fully encapsulates the core.

Representative equipment and conditions for thermoforming and overmolding are presented in the working examples below.

Above-described variations in the core and skin components and amounts in the skin-core composite apply as well to the method of forming a skin-core composite.

The invention includes at least the following embodiments.

Embodiment 1: A skin-core composite, comprising: a core comprising, based on the total weight of the core, 20 to 90 weight percent of a core matrix thermoplastic resin having a glass transition temperature of 75 to 250 °C, 10 to 50 weight percent of core reinforcing fibers having a length of 4 to 50 millimeters, 0 to 30 weight percent of toughening fibers comprising a toughening thermoplastic resin having a glass transition temperature of 115 to 350 °C, and 0 to 20 weight percent of a binder thermoplastic resin having a glass transition temperature of 60 to 150 °C; and a skin comprising, based on the total weight of the skin, 50 to 100 weight percent of a skin matrix thermoplastic resin having a glass transition temperature of -20 to 230 °C, and 0 to 50 weight percent of a skin reinforcing fiber.

Embodiment 2: The skin-core composite of embodiment 1, wherein the core matrix thermoplastic resin is selected from the group consisting of polycarbonates, polycarbonate-polysiloxanes, poly(ethylene terephthlalate)s, polyimides, and combinations thereof.

Embodiment 3: The skin-core composite of embodiment 1, wherein the core reinforcing fibers are selected from the group consisting of metal fibers, metallized inorganic fibers, metallized synthetic fibers, glass fibers, graphite fibers, carbon fibers, ceramic fibers, mineral fibers, basalt fibers, polymer fibers having a melting temperature or glass transition temperature at least 50 ° C greater than the glass transition temperature of the core matrix thermoplastic resin, and combinations thereof.

Embodiment 4: The skin-core composite of any one of embodiments 1-3, wherein the core comprises 1 to 30 weight percent of the toughening fiber, and 20 to 89 weight percent of the core matrix thermoplastic resin.

Embodiment 5: The skin-core composite of embodiment 4, wherein the toughening thermoplastic resin is selected from the group consisting of aromatic polyamides, aromatic polyesters, and combinations thereof.

Embodiment 6: The skin-core composite of any one of embodiments 1-5, wherein the core comprises 1 to 20 weight percent of the binder thermoplastic resin.

Embodiment 7: The skin-core composite of embodiment 6, wherein the binder thermoplastic resin is selected from the group consisting of poly(vinyl alcohol), polycarbonate, block polyestercarbonate-polysiloxane, and combinations thereof.

Embodiment 8: The skin-core composite of embodiment 6, wherein the binder thermoplastic resin comprises a block polyestercarbonate-polysiloxane comprising a polyester block comprising resorcinol ester units having the structure

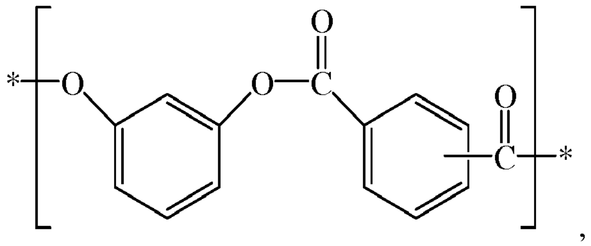

a polycarbonate block comprising carbonate units having the structure

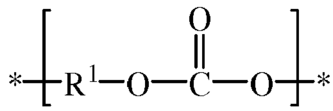

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units.

Embodiment 9: The skin-core composite of embodiment 8, wherein the block polyestercarbonate-polysiloxane comprises, based on total moles of carbonate and ester units, 70 to 90 mole percent of resorcinol ester, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units.

Embodiment 10: The skin-core composite of any one of embodiments 1-9, wherein the skin matrix thermoplastic resin is selected from the group consisting of polypropylenes, polyesters, polyamides, polycarbonates, polyetherimides, poly(phenylene sulfide)s, polyarylketones, polycarbonate-polysiloxanes, and combinations thereof.

Embodiment 11: The skin-core composite of any one of embodiments 1-9, wherein the skin reinforcing fibers are selected from the group consisting of metal fibers, metallized inorganic fibers, metallized synthetic fibers, glass fibers, graphite fibers, carbon fibers, ceramic fibers, mineral fibers, basalt fibers, polymer fibers having a melting temperature or glass transition temperature at least 50 °C greater than the glass transition temperature of the skin matrix thermoplastic resin, and combinations thereof.

Embodiment 12: The skin-core composite of embodiment 1, wherein the core comprises 30 to 70 weight percent of the core matrix thermoplastic resin, 10 to 50 weight percent of the core reinforcing fibers, 5 to 25 weight percent of the toughening fiber, and 5 to 15 weight percent of the binder thermoplastic resin; wherein the skin comprises, based on the total weight of the skin, 50 to 75 weight percent of the skin matrix thermoplastic resin, and 25 to 50 weight percent of the skin reinforcing fibers; wherein the core matrix thermoplastic resin comprises a polyimide; wherein the core reinforcing fibers are selected from the group consisting of glass fiber, carbon fiber, and combinations thereof; wherein the toughening thermoplastic resin comprises an aromatic polyamide; wherein the binder thermoplastic resin comprises a block polyestercarbonate-polysiloxane comprising a polyester block comprising resorcinol ester units having the structure

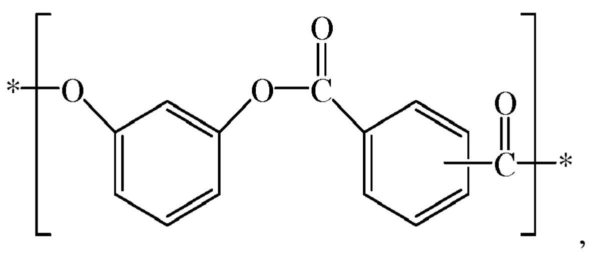

a polycarbonate block comprising carbonate units having the structure

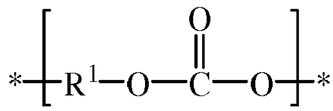

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 70 to 90 mole percent of resorcinol ester, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units; wherein the skin matrix thermoplastic resin comprises a polycarbonate-polysiloxane; and wherein the skin reinforcing fibers are selected from the group consisting of glass fiber, carbon fiber, and combinations thereof.

Embodiment 13: A method of forming a skin-core composite, the method comprising: thermoforming and overmolding a core to form a skin-core composite; wherein the core comprises, based on the total weight of the core, 20 to 90 weight percent of a core matrix thermoplastic resin having a glass transition temperature of 75 to 250 °C, 10 to 50 weight percent of core reinforcing fibers, 0 to 30 weight percent of toughening fibers comprising a toughening thermoplastic resin having a glass transition temperature of 115 to 350 °C, and 0 to 20 weight percent of a binder thermoplastic resin having a glass transition temperature of 60 to 150 °C; wherein the thermoforming comprises exposing the core to a temperature of 120 to 300 °C and a pressure of 2,000 to 25,000 kilopascals for a time of 50 to 500 seconds; and wherein the overmolding comprises molding a skin composition onto at least a portion of a surface of the core to form a skin that at least partially encapsulates the core; and wherein the skin composition comprises, based on the total weight of the skin composition, 50 to 100 weight percent of a skin matrix thermoplastic resin having a glass transition temperature of -20 to 230 °C, and 0 to 50 weight percent of skin reinforcing fibers.

Embodiment 14: The method of embodiment 13, wherein the thermoforming precedes the overmolding.

Embodiment 15: The method of embodiment 13, wherein the thermoforming and the overmolding are simultaneous.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

EXAMPLES

Materials used in these examples are summarized in Table 1.

Table 1

| Component | Description |
|---|---|
| CF | Carbon fiber having a diameter of about 7 micrometers and a length of about 12 millimeters; obtained as TENAX™-A HT C124 from Teijin. |
| APF | Poly(p-phenylene terephthalamide) fiber having a diameter of about 12 micrometers and a length of about 12 millimeters; obtained as TWARON™ 2287 from Teijin Aramid. |
| PEIF 15 | Polyetherimide fiber having a diameter of about 15 micrometers and a length of about 12 millimeters; obtained as KURAKISSS™ UP801 2640T/1200F from Kuraray. |
| PEIF 25 | Polyetherimide fiber having a diameter of about 25 micrometers and a length of about 12 millimeters; obtained as KURAKISSS™ UP801 8.8T x 12mm from Kuraray. |
| PVAF | Poly(vinyl alcohol) fiber having a diameter of about 7 micrometers and a length of about 3 millimeters; obtained as KURALON™ SPG056-11 from Kuraray. |
| PCF | Polycarbonate fiber having a diameter of about 15 micrometers and a length of about 4 millimeters; prepared from LEXAN™ 141 polycarbonate resin from SABIC. |
| GF | Glass fiber, having a diameter of about 16 micrometers, and a length of about 12 millimeters; obtained as OPTIFLOW™ 790C from Owens Corning. |

(continued)

| Component | Description |
|---|---|
| PEC-Si | para-Cumylphenol endcapped block polyestercarbonate-polysiloxane with about 99 weight percent total of polyester blocks and polycarbonate blocks, and about 1 weight percent polysiloxane blocks; the polyestercarbonate portion contains about 80 mole percent 1,3-phenylene isophthalate-*co*-terephthalate units, about 9 mole percent resorcinol carbonate units, and about 11 mole percent bisphenol A carbonate units; the polysiloxane blocks have, on average, about 10 dimethylsiloxane units per block; the polyestercarbonate-polysiloxane has a weight average molecular weight of about 24,500 grams/mole and is preparable by the procedure of Example 2-14 of Method 2 as described in US Patent No. 7,790,292 B2 to Colburn et al., except that the p-cumylphenol level was adjusted to achieve a weight average molecular weight of about 24,500 grams/mole. |
| OPE | Oligomeric phosphate ester flame retardant; obtained in powder form as FYROLFLEX™ SOL-DP flame retardant from ICL Industrial Products. |
| TBPDP | Tetrakis(2,4-di-tert-butylphenyl)4,4'-biphenyldiphosphonite, CAS Reg. No. 119345-01-6; obtained as IRGAFOS™ P-EPQ from BASF. |
| CF/PC tape | Tape comprising 40 weight percent unidirectional carbon fiber embedded in 60 weight percent polycarbonate, the tape having a thickness of 152 micrometers and a width of 30.48 centimeters; obtained from Barrday. |
| CF/PEIF tape | Tape comprising 40 weight percent unidirectional carbon fiber embedded in 60 weight percent polyetherimide; the tape having a thickness of 152 micrometers and a width of 30.48 centimeters; obtained from Tencate. |
| GFPC | Glass fiber-filled polycarbonate-polysiloxane resin containing 40 weight percent glass fiber; obtained as LNP THERMOCOMP™ D452 PC COPOLYMER resin from SABIC. |
| CFPEI | Carbon fiber-filled polyetherimide resin containing 20 weight percent carbon fiber; obtained as LNP THERMOCOMP™ EC004 resin from SABIC. |

The composition used to prepare block polyestercarbonate-polysiloxane containing fibers (PEC-Si fibers) is summarized in Table 2, where component amounts are expressed in weight percent based on the total weight of the composition. The composition was prepared by dry blending all components and adding the resulting mixture to the feed throat of a twin-screw extruder operating with zone temperatures ranging from 230 to 300 °C. The extrudate was cooled in water before being pelletized.

Table 2

| Component | Amount |
|---|---|
| PEC-Si | 93.44 |
| OPE | 6.50 |
| TBPDP | 0.06 |

Pellets were dried at 80 to 120 °C for 6 to 12 hours before being fed to the hopper of a melt spinning apparatus. The melt spinning apparatus is schematically illustrated in Figure 1, where melt spinning apparatus **1** comprises extruder **5,** in which dried pellets are converted to a melt, melt pump **10,** which conveys the melt to spin pack **15,** where it is filtered, then to spinneret **20,** where multiple fibers are formed from the filtered melt. The fibers are immediately conveyed to quench section **30,** where they are air-cooled and solidified. The cooled fibers then enter spin finish section **40,** where a spin finish can be applied to the surface of the fibers. The fibers then traverse a sequence of godet pairs comprising first godets **50,** second godets **60,** and third godets **70,** where the fibers are drawn (stretched). The fibers then enter winder section **80,** where contact roller **90** facilitates formation of wound fiber **100** around one of two winding cores **110.**

In these experiments, the melt pump was operated at 10 centimeter$^3$/revolution. Extruder and melt pump temperatures were 280 to 330 °C. A 144-hole, single-position spinneret was used. Spinneret holes (nozzles) were circular with a diameter of 0.8 millimeters. The length-to-diameter ratio of each spinneret was 4:1. A 325 U.S. mesh (44 micrometer opening) screen filter was used in the spinpack for filtration of the composition melt. After fibers exited the nozzles, they were solidified by quenching with air at ambient temperature (about 23 °C). Individual filaments were combined to form

multi-filament threads, then a spin finish (an acrylamide copolymer in an oil-in-water emulsion, obtained as LUROL™ PS-11744 from Goulston) was applied to the multi-filament threads before they contacted the first godet. The draw down ratio was 280 to 550. Draw down ratio, which is unitless, is defined as the ratio of speed (in meters/minute) at which the melt exits the spinneret nozzles to the speed (in meters/minute) of the fiber at the first godet. The apparent shear rate was 170 to 1700 $second^{-1}$. Apparent shear rate (in units of $second^{-1}$) is defined according to the equation

$$\text{Apparent shear rate (second}^{-1}\text{)} = 4Q/\pi R^3 \rho$$

wherein $Q$ is the melt throughput per spinneret nozzle (in grams/second), $R$ is the nozzle radius (in centimeters), and $p$ is the polymer melt density (in $grams/centimeter^3$). The mechanical draw ratio was 0.95 to 1.2. Mechanical draw ratio, which is unitless, is defined as the ratio of the first godet speed (in meters/minute) to the winder speed (in meters/minute). The resulting PEC-Si fibers ("PEC-SiF"; multifilament threads), containing individual filaments of 8 denier per filament, had a diameter of about 30 micrometers and were chopped to a length of about 12 millimeters for use in preparation of a nonwoven fabric.

Nonwoven fabrics designated 1, 2, and 3 were prepared using the fiber compositions summarized in Table 3, where fiber amounts are expressed in units of weight percent based on the total weight of fibers.

Table 3

| | 1 | 2 | 3 |
|---|---|---|---|
| CF | 15 | 15 | 0 |
| APF | 25 | 25 | 0 |
| PEIF 15 | 50 | 50 | 0 |
| PEIF 30 | 0 | 0 | 50 |
| PVAF | 10 | 0 | 0 |
| PCF | 0 | 10 | 0 |
| GF | 0 | 0 | 40 |
| PEC-SiF | 0 | 0 | 10 |

The fiber mixtures detailed in Table 3 were used to prepare nonwoven fabrics via a wet-laid (papermaking) process. Figure 2 is a schematic illustration of a papermaking apparatus **200,** which includes mixing tank **210,** run tank **220,** headbox **230,** wire former **240,** dryer **250,** and winder **260.** Fiber dispersions were prepared by dispersing 200 kilograms total of the ingredient fibers in 200 kilograms of an aqueous solution containing a viscosity modifying agent. The viscosity modifying agent was a poly(acrylamide-co-diallyldimethylammonium chloride) solution, 10 weight percent in water, and it was used in an amount effective to provide the aqueous solution with a viscosity of 50 to 200 centipoise. The fiber dispersion was fed onto the wire mesh of a paper-making machine to form an aqueous suspension layer, and aqueous solution was drained through the mesh to form a fiber layer. The fiber layer was transferred to a water washing section where viscosity modifier was washed from the fiber layer. The washed fiber layer was then transferred to a tunnel dryer for a residence time of 120 to 180 seconds, and finally to a winding section, where the nonwoven fabric web was wound on a core. The process speed was 4 to 6 meters/minute. When the roll was fully wound, the edges were trimmed to meet the target width, and the nonwoven fabric web was re-wound to a new core. Water was essentially eliminated from the mat by the sequence of gravity drainage through holes in the wire mesh, squeezing through several pairs of nip rollers, and heating in an ambient-pressure tunnel dryer. Drier temperature variations are summarized in Table 4.

Table 4

| | 1 | 2 | 3 |
|---|---|---|---|
| Drier temperature (°C) | 160 | 200 | 300 |

For nonwoven 1, the combined drier temperature and time melted the poly(vinyl alcohol) fibers, but not the carbon fibers, aromatic polyamide fibers, or polyetherimide fibers. For nonwoven 2, the combined drier temperature and time melted the polycarbonate fibers, but not the carbon fibers, aromatic polyamide fibers, or polyetherimide fibers. For nonwoven 3, the combined drier temperature and time melted the polyestercarbonate-polysiloxane fibers and the polyetherimide fibers, but not the glass fibers.

Nonwovens 1 and 2 had an areal density of 60 grams/meter$^2$. Nonwoven 3 had an areal density of 165 grams/meter$^2$.

The nonwovens were used to prepare composites designated A, B, and C. Composite A was prepared from ten layers of nonwoven 1. Composite B was prepared from ten layers of nonwoven 2. Composite C was prepared from four layers of nonwoven 3. For each of the composites, the layers of nonwoven fabric were stacked one over another, then topped with one layer of 20 gram/meter$^2$ glass fiber woven fabric scrim obtained as BGF 104 from BGF Industries (Greensboro, North Carolina, USA). The combined layers were then passed through a consolidation apparatus. The consolidation apparatus was a steel double belt press obtained as Heather 5 from HELD Technologie GmbH (Trossingen, Germany). The stacked layers were exposed to radiation from an infrared pre-heating device before being fed to the double-belt press. The double-belt press consolidation simultaneously compressed the nonwoven fabrics and caused melting and flowing of the aromatic polyamide fibers and polyetherimide fibers in Composites A and B. A mold release agent, LOCTITE™ FREKOTE™ 700-NC from Henkel, was continuously applied to the steel belts to prevent sticking of the composites to the steel belts. Typical consolidation conditions were 180 to 300 seconds at a temperature of 350 to 400 °C, and a pressure of 800 kilopascals. Consolidation was followed by cooling while maintaining pressure. The cooled, consolidated composites had a continuous resin matrix containing strained carbon fibers (for composites A and B), or strained glass fibers (for composite C). The strained fibers released their residual stress and created "lofting" during the subsequent compression molding step.

Samples (cores) designated D, E, F, and G were prepared using top and bottom layers of CF/PC tape around one of composites A, B, and C, or no composite. The composition of each sample is summarized in Table 5. In the Table 5 row labeled "Tape configuration," "$[90°_2,0°]_{sym}$" means that there were two layers of tape at a 90° orientation, followed by two layers at a 0° orientation, followed by two more layers at a 90° orientation. "$[90°,0°,5]_{sym}$" means that there were five pairs of tape layers, each pair consisting of one layer at a 90° orientation and one layer at a 0° orientation. And "$[90°,0°,2,0.5]_{sym}$" means that there were two pairs of tape layers, each pair consisting of one layer at a 90° orientation and one layer at a 0° orientation. Compression molding of the samples was conducted at a temperature of 260 °C and the pressures listed in Table 5.

Table 5

| | D | E | F | G |
|---|---|---|---|---|
| Composite | None | A | B | C |
| Tape configuration | $[90°_2,0°]_{sym}$ | $[90°,0°,5]_{sym}$ | $[90°,0°,5]_{sym}$ | $[90°,0°,2,0.5]_{sym}$ |
| Molding pressure (kPa) | 2,400 | 6,895 | 6,895 | 6,895 |

After compression molding, samples were overmolded with a "skin" of GFPC on a 440-ton injection molding press operating at a barrel temperature of 280 ° C and a mold temperature of 82 ° C. Thickness values in Table 6 are for the overmolded samples. Both compression molded cores and overmolded samples were tested for deflection at 23° C and 100 Newtons. Deflection values, which are the average of ten measurements per sample, are expressed in millimeters, with lower values being more desirable. The deflection results, presented in Table 6, show that relative to Comparative Example 1 without a core, Examples 1, 2, and 3 containing fiber-reinforced nonwoven cores exhibited smaller changes in deflection from compression molded to overmolded parts. These smaller changes in deflection are associated with better process control.

Table 6

| | C. Ex. 1 | Ex. 1 | Ex. 2 | Ex. 3 |
|---|---|---|---|---|
| Thickness (mm) | 0.937 | 0.999 | 1.01 | 1.04 |
| Deflection at 100 N (mm) for compression molded core | 5.21 | 4.88 | 4.98 | 4.72 |
| Deflection at 100 N (mm) for overmolded composite | 6.72 | 5.86 | 5.68 | 5.59 |

For the overmolded samples, three-point bend flexural modulus values were determined on rectangular samples at 23 °C according to ASTM D790-17. Flexural modulus values, expressed in units of gigapascals (GPa) and representing the average of ten samples, were determined in three orientations: machine direction (0°), transverse direction (90°), and diagonal direction (45°). Machine direction corresponds to the longer side of the rectangular sample. The results, presented in Table 7, show that Examples 1 and 2, containing fiber-reinforced nonwoven cores, exhibit more balanced

moduli in machine and transverse directions than Comparative Example 1 without a fiber-reinforced nonwoven core. Also, Examples 1 and 2 exhibit improved diagonal direction modulus values relative to Comparative Example 1.

Table 7

| | C. Ex. 1 | Ex. 1 | Ex. 2 |
|---|---|---|---|
| Flexural modulus (GPa), machine direction (0°) | 65.7 | 73.6 | 71.1 |
| Flexural modulus (GPa), transverse direction (90°) | 4.43 | 44.0 | 42.6 |
| Flexural modulus (GPa), diagonal direction (45°) | 7.20 | 19.1 | 18.6 |

In order to evaluate surface aesthetics of the overmolded samples, front and back surface roughnesses of the parts were determined using a Keyence VK-X200 optical microscope equipped with a profile measurement device. Results are presented in Table 8, where "$R_a$" is the average roughness of the measured surface profile, expressed in units of micrometers; and "$R_z$" is the average peak-to-valley height of the measured surface profile, expressed in units of micrometers. For both "$R_a$" and "$R_z$", a lower value corresponds to a more uniform (i.e., smoother) surface. The results demonstrate that Example 1 and 2 overmolded samples, containing fiber-reinforced nonwoven cores, exhibit significantly lower $R_a$ and $R_z$ values compared to Comparative Example 1 without a fiber-reinforced nonwoven core.

Table 8

| | C. Ex. 1 | Ex. 1 | Ex. 2 |
|---|---|---|---|
| Front surface $R_a$ ($\mu$m) | 20.3 | 0.903 | 2.94 |
| Front surface $R_z$ ($\mu$m) | 130 | 32.9 | 42.5 |
| Back surface $R_a$ ($\mu$m) | 1.67 | 0.567 | 1.54 |
| Back surface $R_z$ ($\mu$m) | 21.8 | 11.5 | 15.8 |

In a separate experiment for the preparation of an armrest, four layers of carbon fiber-based polyetherimide unidirectional tape (CFPEI), eight layers of Nonwoven 3, and an additional four layers of CFPEI were consolidated on a 565-ton (7.8 gigapascal) press at 375 °C. A pre-determined two-dimensional shape was cut from the product composite, pre-heated by an infrared heater, then placed onto the mold where it was formed and overmolded with carbon fiber-filled polyetherimide resin (CFPEI). The overmolding process was robust, resulting in an acceptable three-dimensional part with good surface aesthetics. Nonwoven core lofting toward the skin was evident as the hole on the upper side of the part showed the gap firmly closing between the skin and the core.

## Claims

**1.** A skin-core composite, comprising:

a core comprising, based on the total weight of the core,

20 to 90 weight percent of a core matrix thermoplastic resin having a glass transition temperature of 75 to 250 °C,
10 to 50 weight percent of core reinforcing fibers having a length of 4 to 50 millimeters,
0 to 30 weight percent of toughening fibers comprising a toughening thermoplastic resin having a glass transition temperature of 115 to 350 °C, and
0 to 20 weight percent of a binder thermoplastic resin having a glass transition temperature of 60 to 150 °C; and

a skin comprising, based on the total weight of the skin,

50 to 100 weight percent of a skin matrix thermoplastic resin having a glass transition temperature of -20 to 230 °C, and
0 to 50 weight percent of a skin reinforcing fiber.

2. The skin-core composite of claim 1, wherein the core matrix thermoplastic resin is selected from the group consisting of polycarbonates, polycarbonate-polysiloxanes, poly(ethylene terephthlalate)s, polyimides, and combinations thereof.

3. The skin-core composite of claim 1, wherein the core reinforcing fibers are selected from the group consisting of metal fibers, metallized inorganic fibers, metallized synthetic fibers, glass fibers, graphite fibers, carbon fibers, ceramic fibers, mineral fibers, basalt fibers, polymer fibers having a melting temperature or glass transition temperature at least 50 ° C greater than the glass transition temperature of the core matrix thermoplastic resin, and combinations thereof.

4. The skin-core composite of any one of claims 1-3, wherein the core comprises 1 to 30 weight percent of the toughening fiber, and 20 to 89 weight percent of the core matrix thermoplastic resin.

5. The skin-core composite of claim 4, wherein the toughening thermoplastic resin is selected from the group consisting of aromatic polyamides, aromatic polyesters, and combinations thereof.

6. The skin-core composite of any one of claims 1-5, wherein the core comprises 1 to 20 weight percent of the binder thermoplastic resin.

7. The skin-core composite of claim 6, wherein the binder thermoplastic resin is selected from the group consisting of poly(vinyl alcohol), polycarbonate, block polyestercarbonate-polysiloxane, and combinations thereof.

8. The skin-core composite of claim 6, wherein the binder thermoplastic resin comprises a block polyestercarbonate-polysiloxane comprising a polyester block comprising resorcinol ester units having the structure

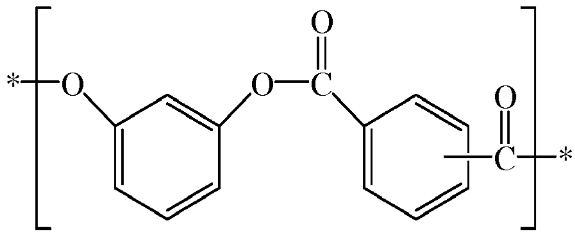

,

a polycarbonate block comprising carbonate units having the structure

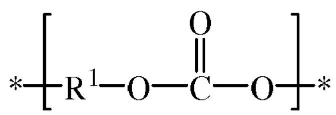

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units.

9. The skin-core composite of claim 8, wherein the block polyestercarbonate-polysiloxane comprises, based on total moles of carbonate and ester units, 70 to 90 mole percent of resorcinol ester, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units.

10. The skin-core composite of any one of claims 1-9, wherein the skin matrix thermoplastic resin is selected from the group consisting of polypropylenes, polyesters, polyamides, polycarbonates, polyetherimides, poly(phenylene sulfide)s, polyarylketones, polycarbonate-polysiloxanes, and combinations thereof.

**11.** The skin-core composite of any one of claims 1-9, wherein the skin reinforcing fibers are selected from the group consisting of metal fibers, metallized inorganic fibers, metallized synthetic fibers, glass fibers, graphite fibers, carbon fibers, ceramic fibers, mineral fibers, basalt fibers, polymer fibers having a melting temperature or glass transition temperature at least 50 °C greater than the glass transition temperature of the skin matrix thermoplastic resin, and combinations thereof.

**12.** The skin-core composite of claim 1,
wherein the core comprises

30 to 70 weight percent of the core matrix thermoplastic resin,
10 to 50 weight percent of the core reinforcing fibers,
5 to 25 weight percent of the toughening fiber, and
5 to 15 weight percent of the binder thermoplastic resin;

wherein the skin comprises, based on the total weight of the skin,

50 to 75 weight percent of the skin matrix thermoplastic resin, and
25 to 50 weight percent of the skin reinforcing fibers;

wherein the core matrix thermoplastic resin comprises a polyimide;
wherein the core reinforcing fibers are selected from the group consisting of glass fiber, carbon fiber, and combinations thereof;
wherein the toughening thermoplastic resin comprises an aromatic polyamide;
wherein the binder thermoplastic resin comprises a block polyestercarbonate-polysiloxane comprising a polyester block comprising resorcinol ester units having the structure

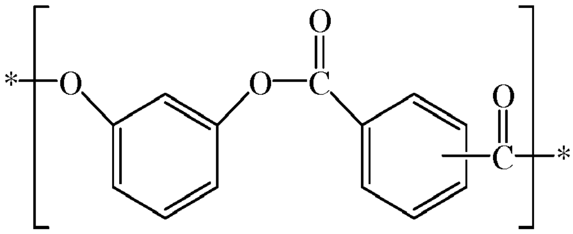

,

a polycarbonate block comprising carbonate units having the structure

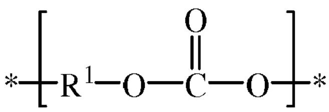

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 70 to 90 mole percent of resorcinol ester, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units;
wherein the skin matrix thermoplastic resin comprises a polycarbonate-polysiloxane; and
wherein the skin reinforcing fibers are selected from the group consisting of glass fiber, carbon fiber, and combinations thereof.

**13.** A method of forming a skin-core composite, the method comprising:

thermoforming and overmolding a core to form a skin-core composite;
wherein the core comprises, based on the total weight of the core,

20 to 90 weight percent of a core matrix thermoplastic resin having a glass transition temperature of 75 to

250 °C,
10 to 50 weight percent of core reinforcing fibers,
0 to 30 weight percent of toughening fibers comprising a toughening thermoplastic resin having a glass transition temperature of 115 to 350 °C, and
0 to 20 weight percent of a binder thermoplastic resin having a glass transition temperature of 60 to 150 °C;

wherein the thermoforming comprises exposing the core to a temperature of 120 to 300 °C and a pressure of 2,000 to 25,000 kilopascals for a time of 50 to 500 seconds; and
wherein the overmolding comprises molding a skin composition onto at least a portion of a surface of the core to form a skin that at least partially encapsulates the core; and
wherein the skin composition comprises, based on the total weight of the skin composition,

50 to 100 weight percent of a skin matrix thermoplastic resin having a glass transition temperature of -20 to 230 °C, and
0 to 50 weight percent of skin reinforcing fibers.

**14.** The method of claim 13, wherein the thermoforming precedes the overmolding.

**15.** The method of claim 13, wherein the thermoforming and the overmolding are simultaneous.

**Amended claims in accordance with Rule 137(2) EPC.**

**1.** A skin-core composite, comprising:

a core comprising, based on the total weight of the core,

20 to 90 weight percent of a core matrix thermoplastic resin having a glass transition temperature of 75 to 250 °C,
10 to 50 weight percent of core reinforcing fibers having a length of 4 to 50 millimeters,
0 to 30 weight percent of toughening fibers comprising a toughening thermoplastic resin having a glass transition temperature of 115 to 350 °C, and
1 to 20 weight percent of a binder thermoplastic resin having a glass transition temperature of 60 to 150 °C; and

a skin comprising, based on the total weight of the skin,

50 to 100 weight percent of a skin matrix thermoplastic resin having a glass transition temperature of -20 to 230 °C, and
0 to 50 weight percent of a skin reinforcing fiber,
**characterized in that** the binder thermoplastic resin comprises a block polyestercarbonate-polysiloxane comprising a polyester block comprising resorcinol ester units having the structure

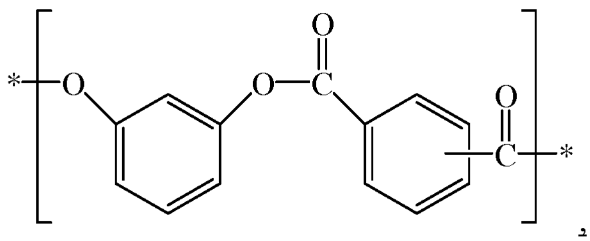

a polycarbonate block comprising carbonate units having the structure

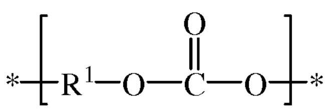

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units.

**2.** The skin-core composite of claim 1, wherein the core matrix thermoplastic resin is selected from the group consisting of polycarbonates, polycarbonate-polysiloxanes, poly(ethylene terephthlalate)s, polyimides, and combinations thereof.

**3.** The skin-core composite of claim 1, wherein the core reinforcing fibers are selected from the group consisting of metal fibers, metallized inorganic fibers, metallized synthetic fibers, glass fibers, graphite fibers, carbon fibers, ceramic fibers, mineral fibers, basalt fibers, polymer fibers having a melting temperature or glass transition temperature at least 50 ° C greater than the glass transition temperature of the core matrix thermoplastic resin, and combinations thereof.

**4.** The skin-core composite of any one of claims 1-3, wherein the core comprises 1 to 30 weight percent of the toughening fiber, and 20 to 89 weight percent of the core matrix thermoplastic resin.

**5.** The skin-core composite of claim 4, wherein the toughening thermoplastic resin is selected from the group consisting of aromatic polyamides, aromatic polyesters, and combinations thereof.

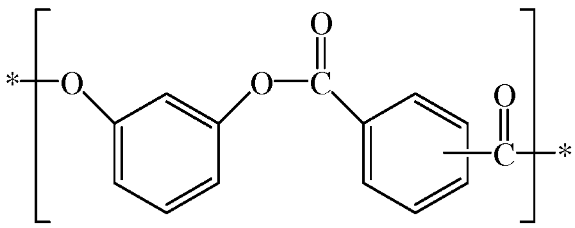;

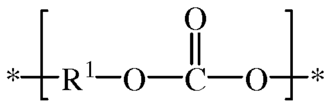

**6.** The skin-core composite of claim 1, wherein the block polyestercarbonate-polysiloxane comprises, based on total moles of carbonate and ester units, 70 to 90 mole percent of resorcinol ester, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units.

**7.** The skin-core composite of any one of claims 1-6, wherein the skin matrix thermoplastic resin is selected from the group consisting of polypropylenes, polyesters, polyamides, polycarbonates, polyetherimides, poly(phenylene sulfide)s, polyarylketones, polycarbonate-polysiloxanes, and combinations thereof.

**8.** The skin-core composite of any one of claims 1-6, wherein the skin reinforcing fibers are selected from the group consisting of metal fibers, metallized inorganic fibers, metallized synthetic fibers, glass fibers, graphite fibers, carbon fibers, ceramic fibers, mineral fibers, basalt fibers, polymer fibers having a melting temperature or glass transition temperature at least 50 °C greater than the glass transition temperature of the skin matrix thermoplastic resin, and combinations thereof.

**9.** The skin-core composite of claim 1,
wherein the core comprises

30 to 70 weight percent of the core matrix thermoplastic resin,
10 to 50 weight percent of the core reinforcing fibers,

5 to 25 weight percent of the toughening fiber, and
5 to 15 weight percent of the binder thermoplastic resin;

wherein the skin comprises, based on the total weight of the skin,

50 to 75 weight percent of the skin matrix thermoplastic resin, and
25 to 50 weight percent of the skin reinforcing fibers;

wherein the core matrix thermoplastic resin comprises a polyimide;
wherein the core reinforcing fibers are selected from the group consisting of glass fiber, carbon fiber, and combinations thereof;
wherein the toughening thermoplastic resin comprises an aromatic polyamide;
wherein the binder thermoplastic resin comprises a block polyestercarbonate-polysiloxane comprising a polyester block comprising resorcinol ester units having the structure

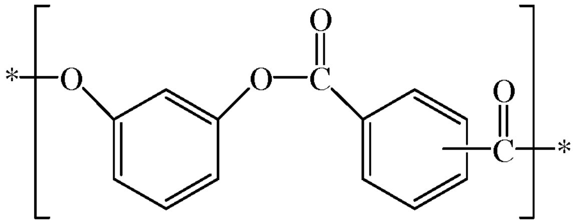

,

a polycarbonate block comprising carbonate units having the structure

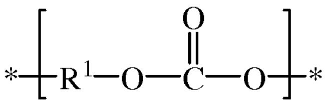

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 70 to 90 mole percent of resorcinol ester, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units;
wherein the skin matrix thermoplastic resin comprises a polycarbonate-polysiloxane; and
wherein the skin reinforcing fibers are selected from the group consisting of glass fiber, carbon fiber, and combinations thereof.

**10.** A method of forming a skin-core composite, the method comprising:

thermoforming and overmolding a core to form a skin-core composite;
wherein the core comprises, based on the total weight of the core,

20 to 90 weight percent of a core matrix thermoplastic resin having a glass transition temperature of 75 to 250 °C,
10 to 50 weight percent of core reinforcing fibers,
0 to 30 weight percent of toughening fibers comprising a toughening thermoplastic resin having a glass transition temperature of 115 to 350 °C, and
1 to 20 weight percent of a binder thermoplastic resin having a glass transition temperature of 60 to 150 °C;

wherein the thermoforming comprises exposing the core to a temperature of 120 to 300 °C and a pressure of 2,000 to 25,000 kilopascals for a time of 50 to 500 seconds; and
wherein the overmolding comprises molding a skin composition onto at least a portion of a surface of the core to form a skin that at least partially encapsulates the core; and
wherein the skin composition comprises, based on the total weight of the skin composition,

50 to 100 weight percent of a skin matrix thermoplastic resin having a glass transition temperature of -20 to 230 °C, and
0 to 50 weight percent of skin reinforcing fibers

wherein the binder thermoplastic resin comprises a block polyestercarbonate-polysiloxane comprising a polyester block comprising resorcinol ester units having the structure

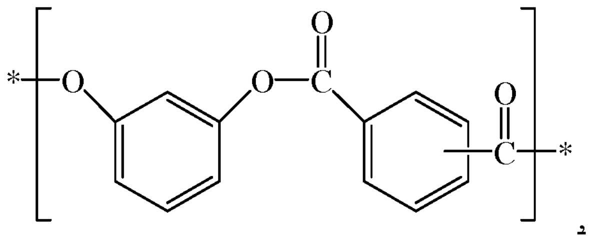

a polycarbonate block comprising carbonate units having the structure

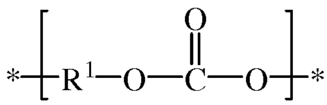

wherein at least 60 percent of the total number of $R^1$ groups are aromatic divalent groups, and a polysiloxane block comprising dimethylsiloxane units; wherein the block polyestercarbonate-polysiloxane comprises, based on total moles of carbonate and ester units, 30 to 90 mole percent of resorcinol ester, 5 to 35 mole percent of carbonate units wherein $R^1$ is 1,3-phenylene, and 5 to 35 mole percent of carbonate units wherein $R^1$ is 2,2-bis(1,4-phenylene)propane, and further comprises, based on the weight of the block polyestercarbonate-polysiloxane, 0.2 to 4 weight percent dimethylsiloxane units.

**11.** The method of claim 10, wherein the thermoforming precedes the overmolding.

**12.** The method of claim 10, wherein the thermoforming and the overmolding are simultaneous.

**13.** The method of claim 10, wherein the block polyestercarbonate-polysiloxane comprises, based on total moles of carbonate and ester units, 70 to 90 mole percent of resorcinol ester, 5 to 15 mole percent of carbonate units wherein $R^1$ is 1,3-phenylene, and 5 to 15 mole percent of carbonate units wherein $R^1$ is 2,2-bis(1,4-phenylene)propane, and further comprises, based on the weight of the block polyestercarbonate-polysiloxane, 0.3 to 3 weight percent dimethylsiloxane units.

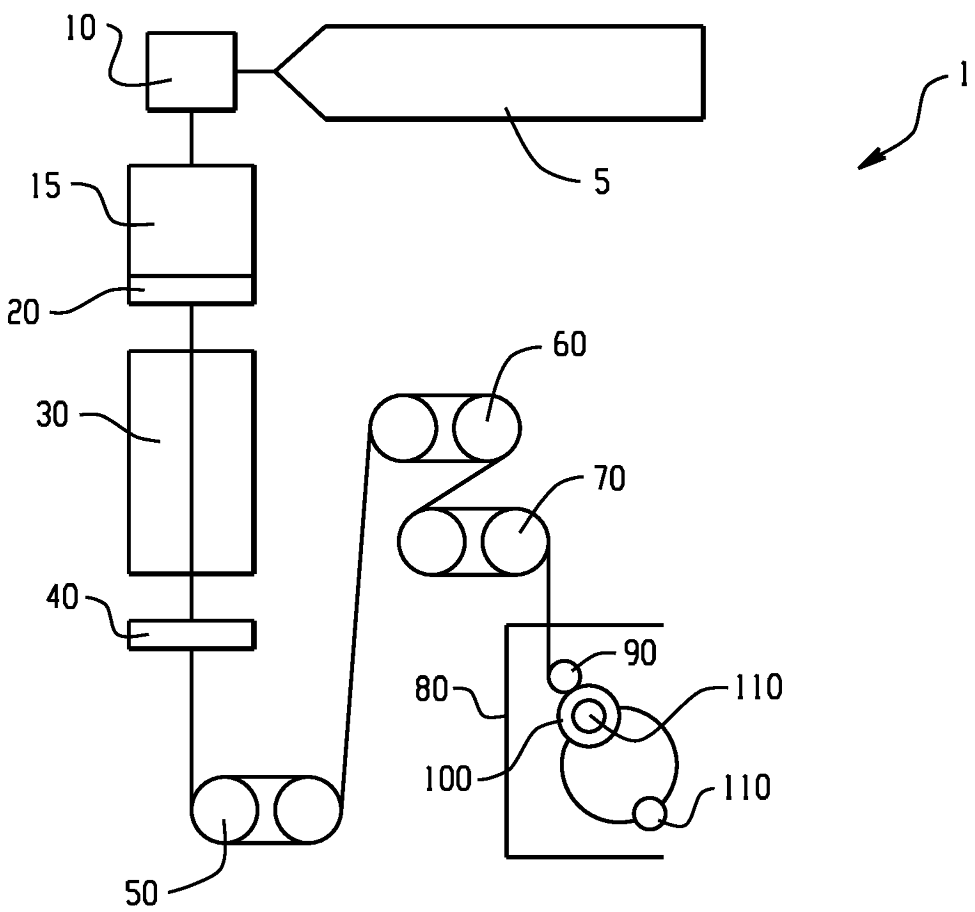
10
15
20
30
40
50
5
1
60
70
80
90
110
100
110

Fig. 1

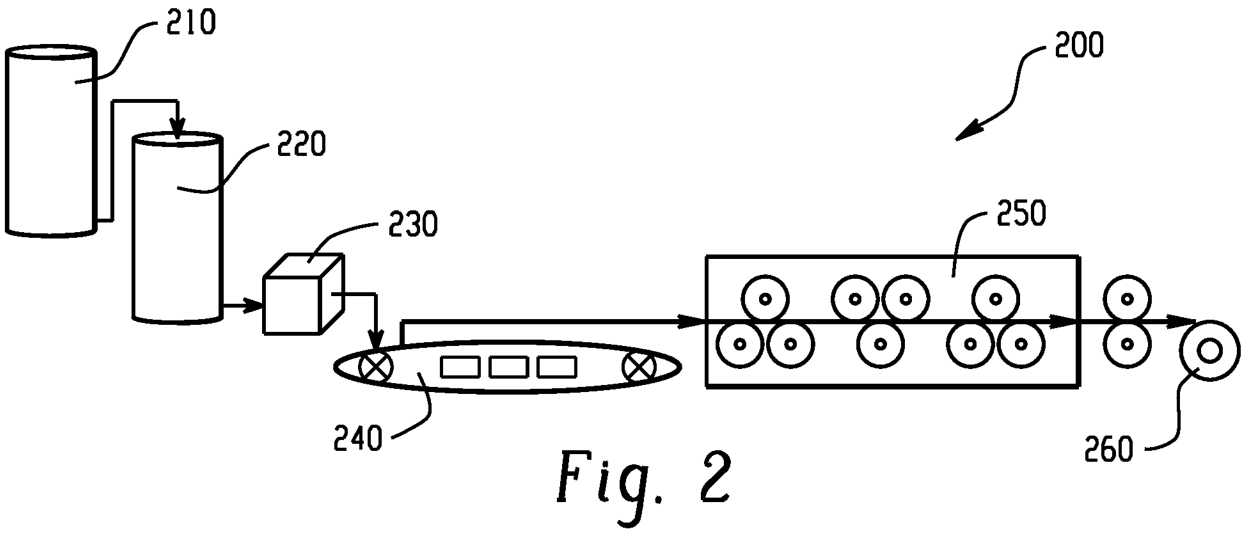
210
220
230
240
250
200
260

Fig. 2

Europäisches Patentamt
European Patent Office
Office européen des brevets

# EUROPEAN SEARCH REPORT

Application Number
EP 18 19 7263

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2016/052234 A1 (WATANABE YASUSHI [JP] ET AL) 25 February 2016 (2016-02-25)<br>* paragraphs [0100], [0049], [0103], [0167], [0121], [0124], [0051], [0169]; claim 1 *<br>----- | 1-7,10, 11,13-15<br>8,9,12 | INV.<br>B32B5/02<br>B32B27/12 |
| A | US 2012/065283 A1 (ADJEI THOMAS [US] ET AL) 15 March 2012 (2012-03-15)<br>* claims 1,9 *<br>----- | 1-15 | |

TECHNICAL FIELDS SEARCHED (IPC)

B29C
B32B

The present search report has been drawn up for all claims

2

| Place of search | Date of completion of the search | Examiner |
|---|---|---|
| Munich | 15 March 2019 | Ferrer Santos, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 19 7263

This annex lists the patent family members relating to the patent documents cited in the above-mentioned European search report. The members are as contained in the European Patent Office EDP file on
The European Patent Office is in no way liable for these particulars which are merely given for the purpose of information.

15-03-2019

| Patent document cited in search report | Publication date | Patent family member(s) | Publication date |
|---|---|---|---|
| US 2016052234 A1 | 25-02-2016 | BR 112015024448 A2 | 18-07-2017 |
| | | CN 105102705 A | 25-11-2015 |
| | | EP 2980292 A1 | 03-02-2016 |
| | | JP 6239297 B2 | 29-11-2017 |
| | | JP 6239298 B2 | 29-11-2017 |
| | | JP 2014223780 A | 04-12-2014 |
| | | JP 2014224333 A | 04-12-2014 |
| | | KR 20150133754 A | 30-11-2015 |
| | | RU 2015145508 A | 12-05-2017 |
| | | TW 201508117 A | 01-03-2015 |
| | | US 2016052234 A1 | 25-02-2016 |
| | | WO 2014156861 A1 | 02-10-2014 |
| US 2012065283 A1 | 15-03-2012 | CN 103210132 A | 17-07-2013 |
| | | EP 2616579 A2 | 24-07-2013 |
| | | JP 2014503694 A | 13-02-2014 |
| | | KR 20130109134 A | 07-10-2013 |
| | | US 2012065283 A1 | 15-03-2012 |
| | | US 2015344664 A1 | 03-12-2015 |
| | | WO 2012037225 A2 | 22-03-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- US 7790292 B2, Colburn

### Non-patent literature cited in the description

- *CHEMICAL ABSTRACTS,* 119345-01-6